# EUROPÄISCHE PATENTANMELDUNG

(11) **EP 0 784 149 A1**
(43) Veröffentlichungstag der Anmeldung: **16.07.1997**
(21) Anmeldenummer: 96118313.4
(22) Anmeldetag: 15.11.1996
(51) Int. Cl.: F01L 13/06, F02M 61/14

(54) **Direkteinspritzende Brennkraftmaschine**

(30) Priorität: 09.01.1996 DE 19600562
(71) Anmelder: MERCEDES-BENZ AG, 70327 Stuttgart (DE)
(72) Erfinder: Aupperle, Walter, 71404 Korb (DE)

(57) **Zusammenfassung**

Die Erfindung betrifft eine direkteinspritzende Brennkraftmaschine mit einem zentral im Zylinderkopf (1) angeordneten Kraftstoffeinspritzventil (2), das in einem einen Sitz (5) aufweisenden Aufnahmeschacht (4) im Zylinderkopf (1) einsteckbar ist, und mit einem Niederhalter (7), der das Kraftstoffeinspritzventil (2) abdichtend auf seinen Sitz (5) drückt, wobei der Niederhalter (7) mit einer Spannschraube (8) am Zylinderkopf (1) befestigt ist. Erfindungsgemäß wird das Kraftstoffeinspritzventil (2) und ein benachbart hierzu angeordnetes Motorbremsventil (3), welches in eine Führungsbohrung (12) im Zylinderkopf (1) einsteckbar ist, durch einen gemeinsamen Niederhalter (7) in den entsprechenden Einbaupositionen abdichtend fixiert.

## Beschreibung

Die Erfindung betrifft eine direkteinspritzende Brennkraftmaschine mit einem zentral im Zylinderkopf angeordneten Kraftstoffeinspritzventil gemäß dem Oberbegriff des Patentanspruchs 1.

Aus der DE 43 15 233 A1 ist eine solche direkteinspritzende Brennkraftmaschine bekannt, bei der ein Kraftstoffeinspritzventil in eine Aufnahmebohrung im Zylinderkopf einsteckbar ist und mit Hilfe eines Niederhalters, der sich am Zylinderkopf abstützt und mit Hilfe einer Spannschraube befestigt wird, abdichtend in dessen Einbauposition fixiert wird.

Es ist die Aufgabe der Erfindung, eine gattungsgemäße Brennkraftmaschine derart weiterzubilden, daß zusätzlich ein Motorbremsventil auf einfache Art und Weise im Zylinderkopf angeordnet und fixiert werden kann.

Die Aufgabe wird erfindungsgemäß durch die kennzeichnenden Merkmale des Hauptanspruchs gelöst.

Der wesentliche Vorteil der Erfindung besteht in einer Reduzierung des Gewichts und der Kosten, da sich zum einen der Montagevorgang vereinfacht und zum anderen für die Lagefixierung beider Ventile nur ein einziges Bauteil benötigt wird.

Weitere Vorteile und Ausgestaltungen gehen aus den Unteransprüchen und der Beschreibung hervor. Die Erfindung ist nachstehend anhand einer Zeichnung, die einen Zylinderkopf einer direkteinspritzenden Brennkraftmaschine teilweise im Schnitt zeigt, näher beschrieben.

Im Zylinderkopf 1 einer direkteinspritzenden Brennkraftmaschine ist ein insgesamt mit 2 bezeichnetes Kraftstoffeinspritzventil und ein insgesamt mit 3 bezeichnetes Motorbremsventil angeordnet. Mit Hilfe des Kraftstoffeinspritzventils 2 wird Kraftstoff direkt in den nicht dargestellten Brennraum der Brennkraftmaschine eingespritzt. Das Motorbremsventil 3 wird zur Erhöhung der Bremswirkung der Brennkraftmaschine im Leerlauf beziehungsweise im Schubbetrieb eingesetzt. Hierzu wird das Motorbremsventil 3 am Ende des Verdichtungstaktes geöffnet und so das komprimierte Gas vor dem eigentlichen Ausschubtakt aus dem Brennraum abgeführt. Die Bremswirkung beruht auf der Arbeit, die von der Brennkraftmaschine bei der Abwärtsbewegung des Kolbens für die Ausdehnung der im Brennraum verbleibenden Restluftmenge aufgebracht werden muß. Die Funktion beider Ventile 2, 3 ist prinzipiell bekannt und wird daher im folgenden nicht näher beschrieben.

Zur Aufnahme des Kraftstoffeinspritzventils 2 ist im Zylinderkopf 1 ein Aufnahmeschacht 4 mit einem Sitz 5 für das Kraftstoffeinspritzventil 2 vorgesehen. Bei der Montage wird das Kraftstoffeinspritzventil 2 in den Aufnahmeschacht 4 eingesteckt und kommt dabei am Sitz 5 zur Anlage. Der genaue Aufbau des Kraftstoffeinspritzventils 2 ist nicht Gegenstand der Erfindung und wird daher auch nicht näher beschrieben. Da im Betrieb der Brennkraftmaschine im Brennraum hohe Drücke auftreten muß der Aufnahmeschacht 4 gegenüber der Umgebung abgedichtet werden. Hierzu ist am Außenumfang des Kraftstoffeinspritzventils 2 beispielsweise ein Dichtring 6 vorgesehen. Um zu verhindern, daß das Kraftstoffeinspritzventil 2 vom Sitz 5 abhebt, muß das Kraftstoffeinspritzventil 2 in seiner Einbauposition fixiert werden. Hierzu wird ein Niederhalter 7 mit Hilfe einer Spannschraube 8 am Zylinderblock 1 befestigt, wobei im vom Brennraum abgewandten Ende des Kraftstoffeinspritzventils 2 eine Vertiefung 9 vorgesehen ist, in die ein am Niederhalter 7 angeordneter Zentrierstift 10 eingreift. Zur Montage des Niederhalters 7 wird die Spannschraube 8 durch eine Aufnahmebohrung 11 im Niederhalter 7 geführt und in eine nicht gezeigte Gewindebohrung am Zylinderkopf 1 eingeschraubt.

Benachbart zum Aufnahmeschacht 4 für das Kraftstoffeinspritzventil 2 ist im Zylinderkopf 1 eine Führungsbohrung 12 mit einem Sitz 13 zur Aufnahme des Motorbremsventils 3 vorgesehen. In der Führungsbohrung 12 ist ein Kolben 14, der am vom Brennraum abgewandten Ende des Ventilschaftes 15 anliegt, beweglich geführt. Am oberen Ende des Ventilschaftes 15 ist ein Anlaufbund 23 vorgesehen, an dem sich eine koaxial zum Ventilschaft 15 angeordnete Ventilfeder 22 gegen den Sitz 13 abstützt und dadurch das Motorbremsventil 3 in Schließstellung hält.

Der Kolben 14 begrenzt auf seiner vom Brennraum abgewandten Seite einen Drucksteuerraum 16, in den über eine Bohrung 17 Drucköl oder Druckluft gesteuert zugeführt wird. Zur Oberseite des Zylinderkopfes 1 hin ist der Drucksteuerraum 16 durch ein Druckstück 18, das einen Bund 19 und einen am Außenumfang des Bundes 19 angeordneten Dichtring 20 aufweist, abgedichtet. Der Bund 19 ragt in der Einbauposition in die Aufnahmeöffnung der Führungsbohrung 12 hinein, so daß der Dichtring 20 am Innenumfang der Führungsbohrung 12 anliegt. Gegen den Brennraum ist der Drucksteuerraum 16 durch einen Dichtring 21, der am Außenumfang des Kolbens 14 angeordnet ist, abgedichtet. Durch Zufuhr von Drucköl oder Druckluft in den Drucksteuerraum 16 wird der Kolben 14 nach unten bewegt und dadurch das Motorbremsventil 3 geöffnet. Wird der Druck im Drucksteuerraum 16 reduziert, so wird das Motorbremsventil 3 mit Hilfe der Ventilfeder 22 wieder in Schließstellung zurückbewegt.

Erfindungsgemäß wird vorgeschlagen, daß der Niederhalter 7 derart am Zylinderblock 1 angeordnet ist, daß er sich an gegenüberliegenden Enden sowohl am Kraftstoffeinspritzventil 2 als auch am Druckstück 18 des Motorbremsventils 3 abstützt. Hierzu weist der Niederhalter 7 eine im mittleren Bereich vom Zylinderkopf 1 weg gerichtete Wölbung 24 auf. Außerdem sind an beiden Enden des Niederhalters 7 Zentrierstifte 10, 25, die in entsprechende Vertiefungen 9, 26 am Kraftstoffeinspritzventil 2 beziehungsweise am Druckstück 18 eingreifen, angeordnet. Die Aufnahmebohrung 11 für die Spannschraube 8 und die entsprechende Gewindebohrung am Zylinderkopf 1 ist im Bereich der Wölbung 24 des Niederhalters 7 angeordnet, so daß der Niederhalter 7 bei der Montage im Bereich der Wölbung 24 nicht am Zylinderkopf 1 anliegt, sondern sich ausschließlich über die Zentrierstifte 10, 25 am Kraftstoffeinspritzventil 2 und am Druckstück 18 des Motorbremsventils 3 abstützt. Durch das Eindrehen der Spannschraube 8 können somit beide Ventile 2, 3 in den entsprechenden Einbaupositionen fixiert werden.

Neben dem im Ausführungsbeispiel gezeigten Aufbau des Motorbremsventils 3 ist es auch möglich, die Einzelteile des Motorbremsventils 3 in einem Gehäuse vorzumontieren und dann das komplette Motorbremsventil 3 in die Führungsbohrung 12 einzustecken. Der Niederhalter 7 stützt sich in diesem Fall an der oberen Stirnseite des Gehäuses des Motorbremsventils 3 ab.

Durch eine entsprechende Ausgestaltung der Zentrierstifte 10, 25 können außerdem beide Ventile 2, 3 auf einfache Art und Weise gegen Verdrehen gesichert werden. Hierzu müssen sowohl der Zentrierstift 10, 25 als auch die entsprechende Vertiefung 9, 26 nicht rotationssymmetrisch, jedoch identisch ausgeformt sein, so daß beim Einstecken des Zentrierstiftes 10, 25 in die zugehörige Vertiefung 9, 26 ein drehsicherer Formschluß entsteht. Beispielsweise kann hierzu der Zentrierstift 10 und die Vertiefung 9 pyramidenförmig ausgebildet sein.

Durch die erfindungsgemäße Anordnung können sowohl Gewicht als auch Kosten gespart werden, da zur Fixierung beider Ventile 2, 3 nur ein Bauteil benötigt wird. Außerdem vereinfacht sich die Montage, da nur ein Montagevorgang für beide Ventile 2, 3 notwendig ist.

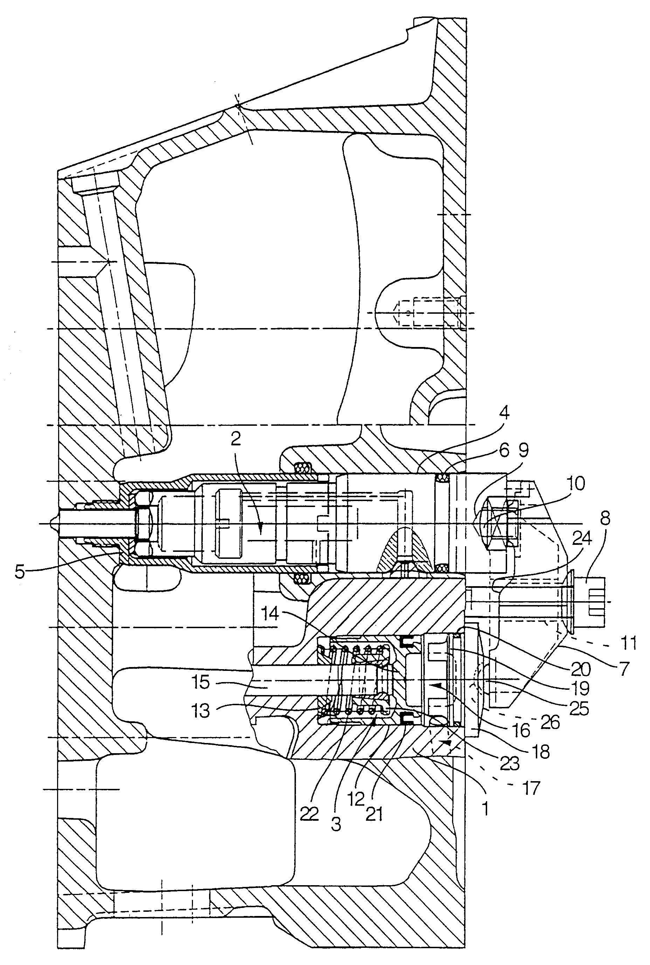

## Patentansprüche

1. Direkteinspritzende Brennkraftmaschine mit einem zentral im Zylinderkopf angeordneten Kraftstoffeinspritzventil, das in einem einen Sitz aufweisenden Aufnahmeschacht im Zylinderkopf einsteckbar ist, und mit einem Niederhalter, der das Kraftstoffeinspritzventil auf seinen Sitz drückt, wobei der Niederhalter mit einer Spannschraube am Zylinderkopf befestigt ist,
**dadurch gekennzeichnet,**
daß benachbart zum Kraftstoffeinspritzventil (2) zusätzlich ein Motorbremsventil (3) vorgesehen ist, welches in eine Führungsbohrung (12) im Zylinderkopf (1) einsteckbar ist, und daß der Niederhalter (7) sowohl das Kraftstoffeinspritzventil (2) als auch das Motorbremsventil (3) in den entsprechenden Einbaupositionen fixiert.

2. Vorrichtung nach Anspruch 1,
**dadurch gekennzeichnet,**
daß der Niederhalter (7) derart ausgeformt ist, daß er in der Einbauposition nicht am Zylinderkopf (1), sondern lediglich an gegenüberliegenden Enden an den Ventilen (2, 3) anliegt und daß im Bereich zwischen den gegenüberliegenden Enden eine Aufnahmebohrung (11) für die Spannschraube (8) im Niederhalter (7) vorgesehen ist.

3. Vorrichtung nach Anspruch 1,
**dadurch gekennzeichnet,**
daß der Niederhalter (7) an gegenüberliegenden Enden Zentrierstifte (10, 25) aufweist, die in entsprechende Vertiefungen (9, 26) an den Ventilen (2, 3) eingreifen.

4. Vorrichtung nach Anspruch 1,
**dadurch gekennzeichnet,**
daß in der Führungsbohrung (12) ein Kolben (14) beweglich geführt ist, der auf seiner dem Brennraum zugewandten Stirnseite am Ventilschaft (15) anliegt und auf seiner dem Brennraum abgewandten Stirnseite einen Drucksteuerraum (16) begrenzt, daß eine Ventilfeder (22) vorgesehen ist, die sich zwischen dem Sitz (13) und einem am oberen Ende des Ventilschaftes (15) angeordneten Anlaufbund (23) abstützt, daß der Drucksteuerraum (16) auf der vom Kolben (14) abgewandten Seite durch ein Druckstück (18) begrenzt wird, wobei das Druckstück (18) durch den Niederhalter (7) dichtend in die Öffnung der Führungsbohrung (12) gedrückt wird, und daß der Kolben (14) durch Einsteuern eines Druckmediums in den Drucksteuerraum (16) in Richtung Brennraum bewegbar ist, so daß das Motorbremsventil (3) gegen die Kraft der Ventilfeder (22) in Öffnungsstellung bewegt wird.

5. Vorrichtung nach Anspruch 5,
**dadurch gekennzeichnet,**
daß das Druckstück (18) einen Bund (23) aufweist, der formschlüssig in die Aufnahmeöffnung der Führungsbohrung (12) ragt und daß am Außenumfang des Bundes (23) ein Dichtring (20) vorgesehen ist.
